Europäisches Patentamt

European Patent Office

Office européen des brevets

(11) Publication number: **0 150 161**
**A2**

# (12) EUROPEAN PATENT APPLICATION

(21) Application number: **85830010.6**

(22) Date of filing: **17.01.85**

(51) Int. Cl.⁴: **G 03 B 31/06**

(30) Priority: **20.01.84 IT 6706084**

(43) Date of publication of application:
**31.07.85 Bulletin 85/31**

(84) Designated Contracting States:
**AT BE CH DE FR GB LI LU NL SE**

(71) Applicant: **SILMA S.p.A.**
**Corso Francia 98**
**I-10098 Rivoli (Torino)(IT)**

(72) Inventor: **de Bianchi, Marco Sassoli**
**c/o SILMA S.p.A. Corso Francia 98**
**I-10098 Rivoli (Torino)(IT)**

(74) Representative: **Buzzi, Franco et al,**
**c/o Jacobacci-Casetta & Perani S.p.A. Via Alfieri, 17**
**I-10121 Torino(IT)**

(54) Slide mounting with provision for a sound-track, and projection, recording and sound reproduction apparatus for slides using such a mounting.

(57) A slide mounting with provision for a sound-track has a quadrangular frame (10) which is intended to hold a strip of photographic film and is provided with a sound-track carrier consisting of a track (16) inserted within the frame and movable therein for the recording and reproduction of a sound signal through recording and reproduction access apertures (22, 24) formed in the periphery of the frame (10).

A projector incorporating a stationary recording and playback head (40) and friction drive means (76, 48) for the sound-track (16) is used for the projection of slides utilising such a mounting.

FIG. 1

EP 0 150 161 A2

Slide mounting with provision for a sound-track, and projection, recording and sound reproduction apparatus for slides using such a mounting

The present invention relates to slide mountings with provision for a sound-track, of the type comprising a quadrangular frame for holding a strip of photographic film and having a sound-track carrier for the recording and reproduction of a sound signal.

Mountings of this type are known, for example, from United States Patents Nos. 3644032, 4014604 and 4102569 and from French Patent Application No. 73 31 501.

In the slide mountings illustrated and described in these documents, the sound-track carrier is fixed to one of the external surfaces of the frame or to a lateral extension thereof. This involves, in the first instance, the disadvantage that it is necessary to use extremely complicated and costly equipment to project the slide, owing to the fact that the means for recording and reproducing the sound signal must be provided with complex systems for movement relative to the sound-track carrier.

In the second instance, there is the disadvantage that the shape and size of the mounting do not permit the use of this mounting with projectors having standardised components, and necessitate special projectors of considerable complexity and cost.

In some cases, as in the French Patent Application No. 73 31 501 for example, it has been proposed to make the sound-track carrier in the form of a spiral microgroove record mounted rotatably on the outside of one of the surfaces of the frame and encircling the area for receiving the photographic film.   Even these solutions involve considerable
complications with regard to the configuration
of the recording and playback head of the slide-
projector, however, in that this head has to be
displaceable so as to follow the spiral of the
micro-groove, as well as the considerable costs
of making the mounting.

The object of the present invention is to obviate
the aforementioned disadvantages and to provide
a slide mounting of the type defined initially,
which can be produced in a relatively simple and
economical manner, which can be used with projectors
that are significantly simpler than those necessary
for the slide mountings with provision a sound-
track according to the prior art, in which the
dimensions of the mounting are exactly the same
as those of slide mountings without provision for
a sound-track, so that it can be used with the
latter on the same projector.

According to the invention, this object is achieved
by virtue of the fact that the sound-track carrier
of the mounting consists of a track inserted in
the frame and movable therein for the recording
and reproduction of the sound signal through recording
and reproduction access apertures formed in the
frame.

By virtue of this characteristic, the mounting
according to the invention can be projected, to
advantage, by simplified projectors in which the
recording and playback head is fixed relative to
the mounting with a significant reduction in the
cost of producing such projectors.   Furthermore,
since the sound-track is incorporated in and protected
by the frame, the dimensions of the mounting can
be kept within the limits of those of conventional slide mountings without provision for a sound-track, with the advantage that it can be used on any existing projector together with slides mounted in various mountings, without the need to use special loaders for these projectors.

Preferably, the sound-track consists of a magnetic tape or strip.

This permits a sound quality to be obtained which is superior to that of known slide mountings with provision for a sound-track, ensuring at the same time an easier and more precise control of the recording and playback speed.

According to the invention, the magnetic tape is inserted adjacent the peripheral zone of the frame, and the recording and reproduction access apertures are formed in the periphery of the frame.

Conveniently, the magnetic tape has two sections parallel to and adjacent two contiguous sides of the frame, and the access apertures in the frame are formed in correspondence with both of these sides.

This characteristic enables the mounting of the invention to be used with films framed vertically or a horizontally, since it allows access for recording and reproducing the sound signal in both positions.

In a preferred embodiment of the invention, the tape has the form of a substantially quadrangular closed loop with sections parallel to the four sides of the frame and directed around guide members close to the corners of the frame.

With this solution, the length of the tape is such as to permit the recording of a sound signal which has a considerable duration and, is, in any event, generally longer than is the case with known slide mountings with provision for a sound-track.

According to another advantageous characteristic of the invention the tape has at least one information and/or instruction carrying portion for automatically controlling primary or secondary functions of the projector used for the slide.

Another object of the invention is a projector for slides at least some of which have provision for a sound-track and use a mounting of the type specified, comprising a projection station, illumination means associated with the projection station, means for receiving and successively transferring the slides to the projection station, and means for recording a sound signal on the sound-track carrier of slide mountings with provision for a sound-track and for reproducing such a sound signal.

The projector according to the invention is characterised in that the recording and reproduction means comprise a magnetic recording and playback head associated with the projection station and intended to penetrate frontally one of the aforesaid apertures in the frame of a slide with provision for a sound-track introduced into the projecting station in use, so that it is disposed in a stationary condition in contact with the magnetic tape, and in that there are provided friction drive means for the tape, intended to penetrate another of the apertures in a slide with provision for a sound-track so as to be in drive contact with the tape, an identification device associated with the projection station and arranged to detect the presence of a slide with provision for a sound-track in the projection station, and actuating means controlled by the identification device for putting the recording and playback head and the drive means into operation.

Compared with conventional projectors for slides with provision for a sound-track, the projector of the invention enables the achievement of a considerable simplification of construction and, hence, a reduction in manufacturing costs together with a better quality of reproduction, by virtue of the fact that the recording and playback head remains stationary relative to the mounting during use.

The invention will now be described in detail with reference to the appended drawings, provided purely by way of non-limiting example, in which:

Figure 1 is a partially cut-away perspective view of a slide mounting with provision for a sound-track, according to the invention:

Figure 2 is an exploded perspective view of the mounting;

Figure 3 is a front elevational view of the slide, and

Figure 4 is a schematic perspective view which illustrates some of the components of a projector for slides with provision for a sound-track using the mounting according to the invention.

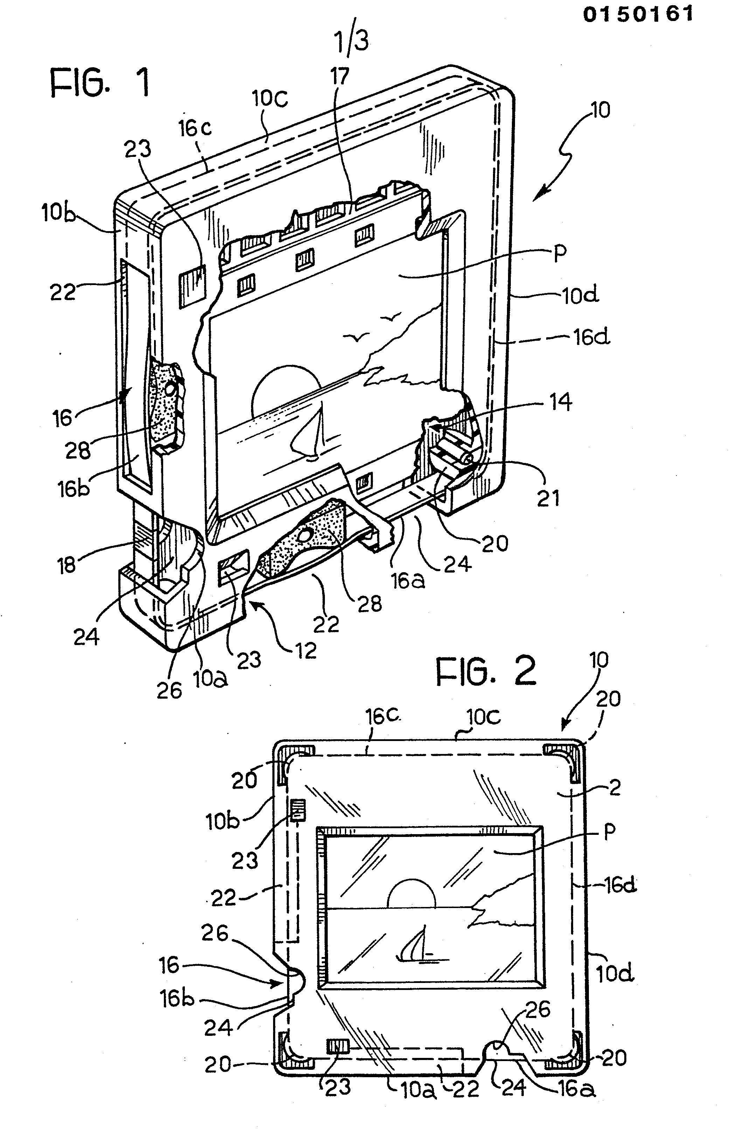

Figures 1 to 3 illustrate a slide with provision for a sound-track, including a mounting 10 formed by a quadrangular frame consisting of two portions 12, 14 normally made from moulded plastics material and connected together in a separable manner. In the example illustrated, the portion 12 has a generally tray-shaped configuration, and the portion 14 consists of a flat plate serving as a cover fitted inside the edge of the portion 12.

The two portions 12 and 14 can be connected together by conventional means from the field of slide mountings, for example, using complementary parts which are snap-fit or force-fit together and are formed on facing surfaces of the portions 12 and 14, in the manner as specified below.

The two portions 12 and 14 are provided, along the edges of their respective central apertures, with parts for receiving and retaining a strip of photographic film P of the size usually used for slides. In the example illustrated , these retaining parts consist of raised mouldings 15, 17; it must be noted, however, that both the conformation of the retaining parts and the general structure of the two portions 12, 14 could differ from those illustrated by way of example. The only essential condition is that the external dimensions of the mounting 10 and of the area for the projection of the strip of film P lie within the limits set by the standard DIN 108, so that they match those of conventional slide mountings with provision for a sound-track. In particular, the two portions 12 and 14 could both consist of substantially flat plates with respective projecting parts which ensure their interconnection and the retention of the strip of film P.

Inside the mounting 10, and hence within the space between the two portions 12 and 14, there is housed a sound-track carrier comprising, in the illustrated example, a magnetic tape or strip 16 in the form of a closed loop normally constituted by a flexible support of polyethylene terephthalate whose external surface is coated with a thin layer of magnetic material, for example iron oxide. It should be noted that the sound-track carrier 16 could have forms and characteristics different from those illustrated in this example, and could be constituted, for example, by a magnetic wire or, in any event, by similar carriers suitable for receiving and reproducing information which is to be converted into sound signals or control signals in general, as will become clear from the description below. In the example illustrated, this control information is intended to be associated with the connection zone 18 of the ends of the tape loop 16, this zone 18 preferably having characteristics of permeability to light.

The tape 16 is housed within an annular channel 19 formed close to the peripheral zone of the portion 12 of the frame 10, and passes around four guide members 20 formed close to the corners of the portion 12 and having, in the example illustrated, the form of cylindrical projections. These projections 20 are hollow and receive press studs 21 for connecting the portions 10 and 12.together.

In this way, the tape 16 has the form of a quadrangular loop with sections 16a, 16b, 16c and 16d parallel to and adjacent the corresponding sides 10a, 10b, 10c and 10d of the mounting 10.

Although the conformation of the tape 16 illustrated in the drawings can be considered as the preferred embodiment thereof, it should be noted that different conformations can be envisaged within the scope of the present invention. For example, the tape 16 could be in the form of a closed loop with two sections parallel to and adjacent only one of the sides 10a - 10d of the frame 10, and passing around a single pair of guide members 20 close to the ends of this side. Alternatively, the tape 16 could have an open configuration rather than the form of a closed loop, for example, with two sections parallel to and adjacent two contiguous sides 10a, 10b of the mounting 10 and passing around a single guide member adjacent the corner defined by these sides. In this case, the ends of the tape would be wound around two sprung rollers close to the distal ends of the two sides.

In any event, the preferreu solution is considered to be that in which the tape 16 has at least two sides parallel to and adjacent two contiguous sides of the mounting 10, for the purpose of allowing the slide to be projected in two different positions corresponding to the vertical position of one or other of the said sides of the mounting, so as to permit shots to be viewed correctly whether they are on the strip of film P vertically or horizontally.

From this point of view, it is clear that the closed-loop conformation of the example is considered to be the most advantageous since it can offer the maximum length of tape 16 useable for a sound-track.

Referring again to the example illustrated, two of the contiguous sides 10a,10b of the mounting 10 are provided with respective access apertures for the recording and/or reproduction of a signal on the tape 16, and for the control its movement within the mounting 10. These apertures comprise, for each of the sides 16a and 16b, an elongate slot 22 and a notch 24 which extends into portions 12 and 14 to form a rounded recess 26. Each of the slots 22 is faced by a pressure member 28, conveniently consisting of a shaped felt pad fixed or supported in a swivelling manner within the mounting 10, on which bears that portion of the section 16a or that portion of the section 16b of the tape 16 located in correspondence with the respective groove 22 bears.

In the portion 14 are formed two right-angled holes 23 which open into the end portions of the slots 22 opposite the notches 24, and the function of which will be explained below.

As will become clearer from what follows, the two elongated slots 22 are used for the introduction of a transducer or recording and playback head for the tape 16, and the rounded recesses 24, 26 allow the insertion of a device for the identification of the mounting 10 and the driving of the tape 16 during recording and playback.

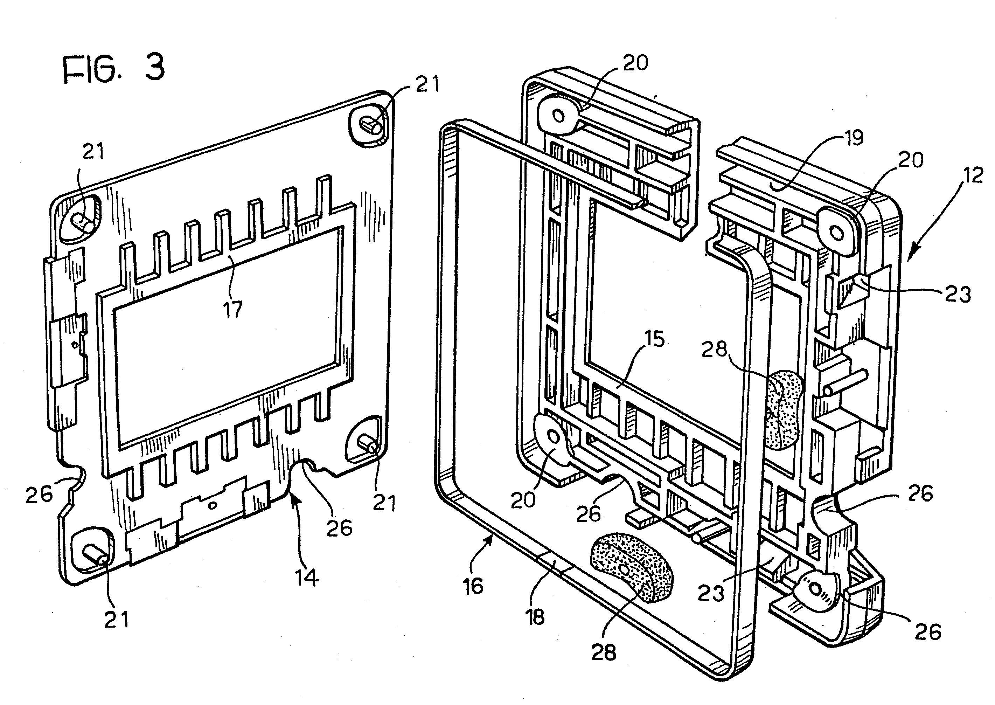

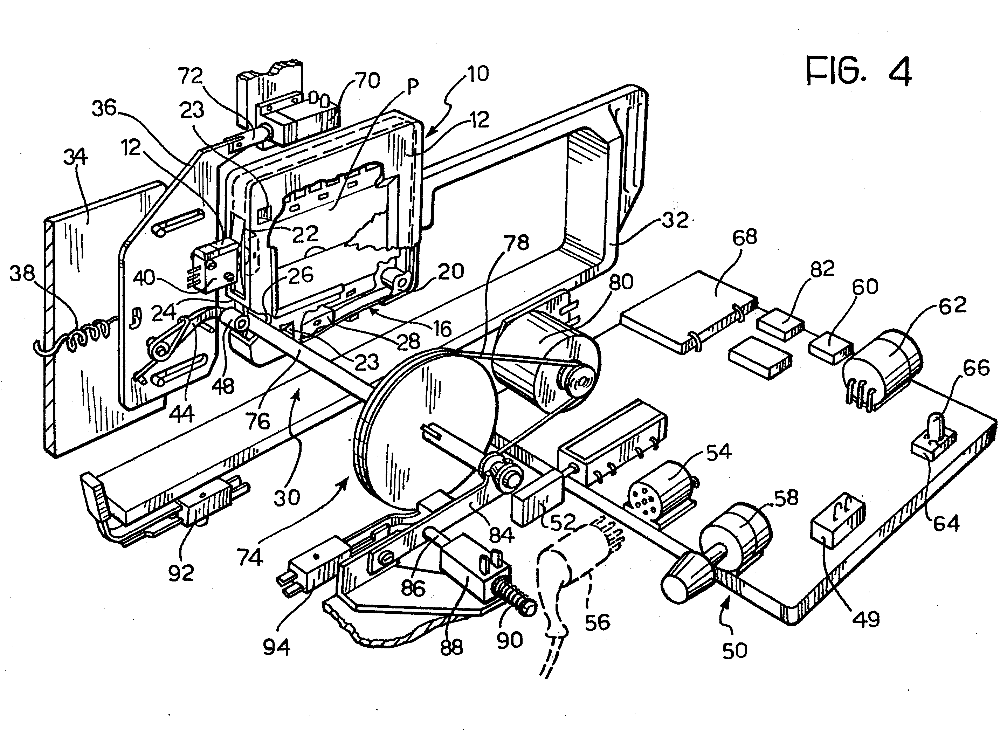

These elements form parts of a projector for slides with provision for sound-track using mountings 10 according to the invention, which is illustrated partially and schematically in Figure 4. For simplicity, those parts of the projector of the invention common to projectors for conventional slides have been omitted from the drawing, and it has been limited to illustrate only the projection station of the projector, generally indicated 30 in Figure 3, and the elements which cooperate therewith. Briefly, the aforementioned elements common to conventional projectors consist of an illuminating device associated with the projection station 30, means for receiving and successively transferring (by translation, gravity or any other conventional system) the slides to the projection station, with or without a loader of standardised type, and possible motorised means for operating the transfer means.

For the purpose of the present invention it is sufficient to state that, in the illustrated example, a transverse arm 32 is associated with the projection station 30, by means of which the slides are successively extracted from their housings in the loader or appropriate housing zone, introduced into the projection station 30, and then, after projection , removed and reinserted in the seats from which they started.

The projection station 30 is defined by a fixed support structure 34 carrying a support plate 36 which is slidable transversely in the direction of the station 30 against the action of a return spring 38. To the support plate 36 is fixed a recording and playback transducer 40 normally constituted by an electromagnetic head, to the top of which a possible auxiliary transducer 42 may be connected.

An oscillating arm 44 opposed by a pin spring 46 is also mounted on the plate 36 below the head 40, and carries a reaction roller 48 at its free end.

The head 40 is connected electrically at 49, by conductors not illustrated, to a control circuit, schematically indicated 50, including amongst other things a recording control push-button 52, a socket 54 for the connection of a plug 56 connected to a sound source, and a potentiometer 58 for adjusting the volume. The circuit 50 is further connected at 60 or 62 to a loudspeaker, respectively internal or external, and to a possible electronic counter 64 connected to a signal lamp for indicating the period of recording.

The auxiliary transducer 42 is connected electrically by conductors not illustrated, to a logic device 68 which controls the excitation of an electromagnetic actuator 70 for effecting, by means of a rod 72, the sliding of the support plate 36 relative to the support structure 34 against the action of the return spring 38.

Means for the identification of the mounting 10 and the driving of the magnetic tape 16 are generally indicated 74. These means comprise essentially a rotating shaft 76 the axis of which extends alongside the roller 48 and which is rotated, through a belt drive 78, by an electric motor 80 connected electrically to the control circuit 50 at 82 by conductors, not shown.

The shaft 76 is displaceable axially between a withdrawn inoperative position, in which it is spaced from the projection station 30, and an advanced operative position illustrated in Figure 4. For the effecting of this displacement, the shaft 76 is connected to a control arm 84 consisting of a sprung blade connected to a rod 86 of an electromagnetic actuator 88 which acts in such a way as to displace the arm 84 into the condition corresponding to the advanced position of the shaft 76, against the action of a return spring 90.

The electromagnetic actuator 88 is also connected to the control circuit by conductors, not illustrated, and its excitation is controlled through a switch 92 associated with the transfer arm 32 and also connected to the circuit 50. When the switch 92 is closed by the abutment of the arm 32, the actuator 88 is excited and causes the shaft 76 to advance by means of the sprung arm 84.

A further switch, indicated 94, cooperates with the sprung arm 84 and is connected to the circuit 50 by conductors, not illustrated, for controlling the supply to the electric motor 80. When the switch 94 is closed by the full displacement of the sprung arm 84, which corresponds to the full advancement of the shaft 76, it controls the supply to the motor 80 and thus the rotation of the shaft 76. The same switch 94 controls the excitation of the electromagnetic actuator 70 and hence the sliding of the support plate 36, with the transducers 40, 42 and the reaction roller 48, towards the projection station 30.

An explanation of the functioning of the described projector will now be given, limited to the operation of the parts described as falling within the scope of the invention.

In the following, it will be supposed that the projection station 30 is supplied with a slide using a mounting 10 according to the invention, and the case will also be supposed in which the slide transferred to station 30 is of a different type, for example a normal slide without provision for a sound-track, such that the apparatus according to the invention will be shown to be capable of projecting, without distinction, slides with provision for a sound-track according to the invention and conventional slides.

SLIDE LOADING

As already stated above, the slide can come from a loader (linear or circular), normally of the standard DIN 108 type, or it can come directly from a zone where it is housed in a stack if the projector can operate without a loader. In the case in which a loader is used, the projector is of course provided with a reciprocating feed device and a device for inserting the slide into the projection station 30. In the illustrated example, this operation is carried out by

- 14 -

the arm 32 which positions the centre of the slide in substantial concidence with the optical axis of the illuminating device of the projector.

SLIDE RECOGNITION

Since, as already stated, the projector can project conventional slides and slides with a mounting 10 having provision for a sound-track according to the invention, it should have the ability to recognise and distinguish the exact type of slide inserted into the projection station 30.

At the end of the slide loading operation, the transfer arm 32 closes the switch 92 whereby the electromagnet 88 associated with the driving shaft 76 is actuated. The shaft 76 is therefore displaced axially until:

a) it comes into contact with a slide with a conventional mounting or a slide with a mounting 10 according to the invention set in the wrong position, and is thus halted without being able to complete its axial stroke. As long as no command to unload the slide is given, the shaft 76 remains pressed against the mounting of the slide without turning. Upon the command to unload, the arm 32 removes the slide from the projection station 30 and re-opens the switch 92 to de-energise the electromagnetic actuator 88. The arm 84 is thus moved back into its starting position by the action of the return spring 90, hence causing the withdrawal of the shaft 76.

It can be concluded from this that the recognition of the slide is acheived by the shaft 76, whether it is a question of a conventional mounting without provision for a sound-track or a wrongly-oriented mounting with provision for a sound-track according to the invention; b) it finds the mounting 10 according to the invention correctly oriented. When the slide using such a mounting 10 is located with its centre substantially in coincidence with the optical axis of the illuminating device of the projector, and the switch 92 has been closed by the arm 32, the electromagnet 88 is excited and, by means of the arm 84, places the shaft 76 in its advanced position. During the forward stroke, the free end of the shaft 76 penetrates the recess 26 of the aperture 24 in the side 10a or the side 10b of the mounting 10. In this way, the shaft 76 completes its stroke and causes the closure of the switch 94 by the arm 84, as a result of which the electromagnetic actuator 70 is excited and, in its turn, moves the support plate 36 towards the projection station 30, that is, towards the side 10a or the side 10b of the mounting 10 facing the support structure 34.

In this way, the reaction roller 48 enters the notch 24 to press the tape 16 against the end of the shaft 76, and the heads 40, 42 enter the corresponding slot 22 to also make contact with the tape 16. The pressure member 28 associated with the slot 22 ensures an effective contact pressure of the tape against the heads 40 and 42.

FUNCTIONING OF THE SOUND DEVICE

The electric motor 80 is activated by the closure of the switch 16 and thus causes the rotation of the shaft 76 simultaneously with the actuation of the heads 40 and 42.

The tape 16 is therefore driven by the friction of the shaft 76 the speed of which is controlled by the circuit 50.

SOUND RECORDING

If a sound source, that is a microphone, is connected to the circuit 50 through the connection 54, the low frequency signal supplied to the circuit 50 is processed, adjusted automatically or manually by means of the control 58, and sent to the head 40 with a high-frequency pre-magnetisation current  This head 40 comprises two sections:

a)  an erasing section with a wide air gap and low impedance, at which only the high-frequency pre-magnetisation current arrives to cause the erasure of any signal already recorded;
b)  a recording/playback section with a narrow air gap and high impedance, which is reached by the high-frequency pre-magnetisation carrier and the low-frequency modulation  originating from the sound source, which are recorded on the tape 16.

The recording is made only if the button 52 is pressed. Moreover, the recording level may be controlled manually and indicated by a specific microammeter.

During recording the following important actions also take place:

-    a few seconds before the end of a full revolution of the tape loop 16, the electronic counter 64 lights the signal lamp 66 or other similar indicator, so as to warn the user that the time allowed for recording is just about to end. Initially, the lamp 66 may light up intermittently and with variable frequency until it stays lit upon termination of the tape 16;

- by means of the potentiometer 58, it is possible to adjust the volume of the control signal obtainable from the internal or external loudspeaker through the connections 60 and 62 respectively.

SOUND REPRODUCTION

While the recording button 52 is in the out position, the circuit 50 is pre-set only for the amplification of the signal coming from the playback section of the head 40.

The sound level may be adjusted manually by means of the potentiometer 58 and be made available to the internal or external loadspeaker.

PAUSE AT THE END OF A TAPE RUN

As stated previously, the zone 18 of the tape 16 has characteristics of light-permeability. When, at the end of the recording and reproduction phases described previously, the movement of the tape 16 presents the zone 18 to the auxiliary head 42, the pause in the cycle can be controlled automatically.

The light produced by the illuminating device of the projector filters through the zone 18 of the tape, and, passing through the corresponding angled hole 23, strikes an electronic photo-element or equivalent device in the transducer 42, which produces an electrical signal that is fed to the logic device 68 of the control circuit 50, serving , in turn, to interrupt the energisation current of the electromagnet 70. Consequently, the support plate 36 is withdrawn by the action of the spring 38, thus spacing the heads 40, 42 and the reaction roller 48 from the tape 16 and the mounting 10. In addition, the logic device 68 brings about, with a pre-set delay period, the interruption of the energisation current of the electromagnet 88. The latter element, therefore, permits the sprung arm 84 to return to its rest position, causing the shaft 76 to be withdrawn and the switch 94 to be opened.

As a result, the supply of the motor 80 is stopped and the initial condition ofthe projector immediately after the phase of loading the slide is resumed. The slide, however, remains on display for an indefinite period until the operator effects,manually or by means of a remote control, its removal from the projection station 30 and its replacement with a new slide.

UNLOADING OF THE SLIDE

It is clear that the slide removal stage is carried out in the opposite manner to that of loading by means of the arm 32, which serves to return the slide to the space in the loader or to the appropriate housing zone if the projector can function without a loader.

SECONDARY FUNCTIONS

Apart from the functions described above, the projector according to the invention lends itself to being provided with a control device for enabling the automatic changing of the slide at the end of the run of the tape 16. By way of an example, it is supposed that there are two projectors connected together and able to exchange with each other end-of-tape information from the zones 18 of their respective tapes 16. It is supposed, furthermore, that the two projectors are provided with a logic device for reversing the control signal from time to time, and, in the event of further sophistication, with a device for enabling the gradual extinguishing or lighting of the respective projecting lamps or the closing and opening of a diaphragm positioned over the objective.

At the end of a run of the tape 16 of the slide projected on the first projector, the transducer 42 transmits to the second projector, through the control circuit 50, a feed and projection-initiation signal, which is followed by a gradual lighting of the lamp of the second projector. At the same time, the projection lamp of the first projector is gradually extinguished during the slide replacement stage. In its turn, at the end of the run of the tape 16, the second projector will carry out the same operations as described for the first, thus permitting sound-track protection with cross-fade in such a way as to achieve a multivisual effect.

It should be noted that the zone 18 of the tape 16 could be pre-arranged for the application of information and/ or instructions of another nature, such as, for example, the regulation of the mode of projection, sound reproduction or any other.

Finally, it should be pointed out that the zone 18 of the tape 16 could be pre-arranged so as to provide information and/or instruction signals of the same nature as those provided by the rest of the tape 16, and being superimposable thereon and distinguishable therefrom. In such a case, the transducer 42 could be omitted and its function could be entrusted to the main transducer 40.

Naturally, the constructional details of the mounting and the component parts of the projector according to the invention may be varied widely with respect to what has been described and illustrated, without thereby departing from the scope of the invention as defined in the following claims.

CLAIMS

1. Slide mounting with provision for a sound-track, including a quadrangular frame for holding a strip of photographic film and having a sound-track carrier for the recording and reproduction of a sound signal, characterised in that the sound-track carrier consists of a track (16) inserted in the frame (10) and movable therein for the recording and reproduction of the sound signal through recording and reproduction access apertures (22, 24), formed in the frame (10).

2. Mounting according to Claim 1, characterised in that the track consists of a magnetic tape or strip.(16).

3. Mounting according to Claim 2, characterised in that the magnetic tape (16) is inserted adjacent the peripheral zone of the frame (10), and in that the recording and reproduction access apertures (22, 24) are formed in the periphery of the frame (10).

4. Mounting according to Claim 3, characterised in that the magnetic tape (16) has at least one section (16a; 16b) parallel to and adjacent one of the sides (10a; 10b) of the frame (10), and in that the access apertures (22, 24) are formed in correspondence with the said side (10a; 10b).

5. Mounting according to Claim 4, characterised
in that the magnetic tape (16) has two sections
(16a, 16b) parallel to and adjacent two contiguous
sides (10a, 10b) of the frame (10), and in that
the access apertures (22, 24) of the frame (10)
are formed in correspondence with both of these
sides (10a, 10b).

6. Mounting according to Claim 4 or Claim 5,
characterised in that the access apertures (22,24)
comprise a first aperture (22) for the introduction
of a recording and/or playback head (40) and a second
aperture (24) for the introduction of means (76)
for driving the movement of the tape (16).

7. Mounting according to Claim 6, characterised
in that the or each  first aperture (22) has associated
therewith a pressure member (28) inserted in the
frame (10) from the opposite part of the aperture
(22) to the tape (16) and acting in such a way as
to press the tape (16) lightly in the direction
of the aperture (22).

8. Mounting according to Claim 5 or Claim 6,
characterised in that the magnetic tape (16) has
the form of a substantially quadrangular closed
loop with sections (16a-16d) parallel to and adjacent
the four sides (10a-10d) of the frame (10) and
directed around  guide members (20) close to the
corners of the frame (10).

9.    Mounting according to  Claim 8, characterised in that the tape has at least one portion (18) for carrying information and/or instructions distinguishable from the sound signal.

10.    Mounting according to Claim 9, characterised in that the portion (18) consists of a light-permeable zone of the tape which is intended to cooperate with an optical detector (42) associated with the recording and/or playback head (40).

11.    Mounting according to any one of the preceding claims, characterised in that the frame (10) consists of two opposed portions (12, 14) connected together in a separable manner and normally made of moulded plastics material, one (12) of which has a channel (19) for housing the sound-track carrier (16).

12.    Projector for slides at least some of which have provision for a sound-track and use a mounting according to the preceding claims, comprising a projection station, illumination means associated with the projection station, means for receiving and successively transferring the slides to the projection station, and means for recording a sound signal on the sound-track and for reproducing such a  sound signal, characterised in that the recording and reproduction means comprise a magnetic recording and playback head (40) associated with the projection station (30) and intended to penetrate frontally one of the first apertures (22) in the frame (10) of a slide with provision for a sound-track introduced into the projection station (30) in use, so that it is disposed in a stationary condition in  contact with the magnetic tape (16), and in that there are provided friction drive means (76,48) for the tape (16) intended to penetrate one of the second apertures (24) of a slide with provision for a sound-track  introduced into the

- 24 -

projection station (30) during use, so to be in drive contact with the tape (16), an identification device (76) associated with the projection station (30) and arranged to detect the presence of a slide with provision for a sound-track in the projection station (30), and actuating means (50) controlled by the identification device (76) for putting the recording and playback head (40) and the drive means (76, 48) in operation.

13. Projector according to Claim 12, characterised in that the drive means include a reaction roller (48) associated with the projection station (30) and intended to penetrate frontally one of the second apertures (24) in the frame (10) of a slide with provision for a sound-track, so as to be in contact with the magnetic tape (16), and a rotating drive shaft (76) intended to penetrate the second aperture (24) of the slide frame (10) laterally so as to be in drive contact with the tape (16) on its side opposite to the roller (48); the rotating shaft being axially displaceable relative to the projection station (30) between a withdrawn inoperative position, in which it does not interfere with the slide, and an advanced operative position, and constituting the identification device for controlling the actuating means (50).

14. Projector according to Claim 13, characterised in that it is provided with control means (84, 88) controlled by the means (32) for transferring the slides to the projection station (30), for automatically effecting the displacement of the drive shaft (76) from its withdrawn position to its advanced position.

15. Projector according to Claim 14, characterised in that it also includes detector means (42) associated with the projection station (30) for cooperating with the said information and/or instruction carrying portion (18) of the magnetic tape (16) of a slide with provision for a sound-track introduced into the projection station (30) during use, and control means (50) controlled by the detector means (42) to automatically control primary functions of the projector, such as, for example, the automatic replacement of the slides, in dependence on the information and/or instructions present on the said carrier portion (18) of the tape (16).

16. Projector according to Claim 15, characterised in that the control means (50) controlled by the detector means (42) are also arranged to automatically control secondary functions of the projector in dependence on the information and/or instructions present on the carrier portion (18) of the magnetic tape (16), such as, for example, the regulation of the projection mode and synchronisation with supplementary projectors associated with the projector.

17. Projector according to Claim 15 or Claim 16, characterised in that the detector means (42) are coupled to the magnetic head (40).

0150161

**FIG. 1**

**FIG. 2**

FIG. 3

FIG. 4

3/3

0150161